(19) Europäisches Patentamt
European Patent Office
Office européen des brevets

(11) **EP 4 411 503 A1**

(12) **EUROPEAN PATENT APPLICATION**
published in accordance with Art. 153(4) EPC

(43) Date of publication:
**07.08.2024 Bulletin 2024/32**

(21) Application number: **22876080.7**

(22) Date of filing: **23.09.2022**

(51) International Patent Classification (IPC):
**G05D 1/02** [(2020.01)]

(52) Cooperative Patent Classification (CPC):
**G05D 1/244; G05D 1/646;** G05D 2105/28;
G05D 2107/70; G05D 2109/16

(86) International application number:
**PCT/JP2022/035549**

(87) International publication number:
**WO 2023/054213 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021160975**

(71) Applicant: **Aichi Steel Corporation
Tokai-shi, Aichi 476-8666 (JP)**

(72) Inventors:
• **ANDO, Takayuki
Tokai-shi, Aichi 476-8666 (JP)**
• **NAGAO, Tomohiko
Tokai-shi, Aichi 476-8666 (JP)**
• **YAMAMOTO, Michiharu
Tokai-shi, Aichi 476-8666 (JP)**

(74) Representative: **Viering, Jentschura & Partner
mbB
Patent- und Rechtsanwälte
Am Brauhaus 8
01099 Dresden (DE)**

(54) **CONTROL METHOD AND CONTROL SYSTEM**

(57)    A control method for causing a vehicle (2) to travel along a target path with high followability includes: a process of measuring deviation in a lateral direction with respect to a magnetic marker (10); a process of obtaining vehicle azimuth; a process of calculating, for a control point set at a position different from a position of a magnetic unit in a longitudinal direction of the vehicle (2), deviation of a control point in the lateral direction with respect to the target path, based on the deviation in the lateral direction with respect to the magnetic marker (10) and the vehicle azimuth; a process of calculating a designated steered angle as a control target of the steered angle for bringing the deviation of the control point in the lateral direction closer to zero; and a process of controlling the steered angle of a steered wheel by taking the designated steered angle as the control target.

[FIG. 1]

EP 4 411 503 A1

**Description**

TECHNICAL FIELD

The present invention relates to a control method and a control system for traveling a vehicle.

BACKGROUND ART

Conventionally, in factories, distribution warehouses, and so forth, automatic carrier vehicles have been widely utilized. As a system for traveling an automatic carrier vehicle automatically, a system using a magnetic tape laid on a floor surface has been known (for example, refer to Patent Literature 1). In this system, deviation of the vehicle in the lateral direction with respect to the magnetic tape is detected, and the vehicle is steered so that this deviation is suppressed.

CITATION LIST

PATENT LITERATURE

Patent Literature 1: Japanese Unexamined Patent Application Publication No. 2011-008598

SUMMARY OF INVENTION

TECHNICAL PROBLEM

However, the above-described conventional system has the following problem. That is, if a delay in steering occurs when the vehicle follows the magnetic tape, a possibility occurs in which the vehicle may go out of a target path and, to avoid this possibility before it happens, it is required to sufficiently suppress vehicle speed.
The present invention was made in view of the above-described conventional problem, and is to provide a vehicular control method and a control system with enhanced followability to a target route.

SOLUTION TO PROBLEM

One mode of the present invention resides in a control method for causing a vehicle to travel along a target path, the vehicle including a magnetic unit that measures a deviation in a lateral direction with respect to a magnetic marker disposed on a traveling road, a circuit that obtains a vehicle azimuth, which is an orientation of the vehicle in a longitudinal direction, and a circuit that controls a steered angle of a steered wheel of the vehicle so that a deviation of a control point in the lateral direction with respect to the target path is brought closer to zero,
the control method including:

a process of measuring the deviation in the lateral direction with respect to the magnetic marker;
a process of obtaining the vehicle azimuth;
a process of calculating, for the control point set at a position different from a position of the magnetic unit in the longitudinal direction of the vehicle, the deviation of the control point in the lateral direction with respect to the target path, based on the deviation in the lateral direction with respect to the magnetic marker and the vehicle azimuth;
a process of calculating a designated steered angle as a control target of the steered angle for bringing the deviation of the control point in the lateral direction closer to zero; and
a process of controlling the steered angle of the steered wheel by taking the designated steered angle as the control target.

One mode of the present invention resides in a control system for causing a vehicle to travel along a target path, the control system including:

a magnetic unit that measures a deviation in a lateral direction with respect to a magnetic marker disposed on a traveling road;
a circuit that obtains a vehicle azimuth, which is an orientation of the vehicle in a longitudinal direction; and
a circuit that calculates, for a control point set at a position different from a position of the magnetic unit in the longitudinal direction of the vehicle, the deviation of the control point in the lateral direction with respect to the target path, based on the deviation in the lateral direction with respect to the magnetic marker and the vehicle azimuth; and

a circuit that calculates a designated steered angle as a control target of a steered angle of a steered wheel of the vehicle so that the deviation of the control point in the lateral direction is brought closer to zero and controls the steered angle of the steered wheel by taking the designated steered angle as the control target.

Advantageous Effects of Invention

In the vehicular control method and the control system according to the present invention, the control point is set at a different position in the longitudinal direction of the vehicle, the position is different from the magnetic unit that measures deviation in the lateral direction with respect to the magnetic marker. Also, in this control method and this control system, the steered angle of the steered wheel is controlled so that the deviation of the control point in the lateral direction with respect to the target path is brought closer to zero. The deviation of the control point in the lateral direction is calculated based on the deviation in the lateral direction with respect to the magnetic marker and the vehicle azimuth.

Based on the vehicle azimuth and the deviation in the lateral direction with respect to the magnetic marker, the deviation of the control point, set at the position different from the position of the magnetic unit in the longitudinal direction of the vehicle, in the lateral direction with respect to the target path can be identified with high accuracy. By setting the control point at the position in the longitudinal direction of the vehicle different from the position of the magnetic unit, controllability of the vehicle can be improved irrespective of the position of the magnetic unit in the longitudinal direction of the vehicle, and followability of the vehicle to the target path can be improved.

BRIEF DESCRIPTION OF DRAWINGS

FIG. 1 is a descriptive diagram exemplarily depicting a traveling road.
FIG. 2 is a descriptive diagram of a magnetic marker.
FIG. 3 is a descriptive diagram of a special area where two magnetic markers are laid.
FIG. 4 is a descriptive diagram of a vehicle.
FIG. 5 is a system structure diagram of the vehicle (lead vehicle) .
FIG. 6 is a system structure diagram of a magnetic sensor array.
FIG. 7 is a graph exemplarily depicting time changes of a magnetic measurement value in a forwarding direction outputted by a magnetic sensor passing directly above the magnetic marker.
FIG. 8 is a graph exemplarily depicting a distribution curve of magnetic measurement values in a vehicle-width direction by magnetic sensors C1 to C15.
FIG. 9 is a flow diagram depicting a flow of operation when magnetic marker 10 is detected.
FIG. 10 is a descriptive diagram of a vehicle azimuth identified by using one magnetic marker.
FIG. 11 is a descriptive diagram of a vehicle azimuth identified by using two magnetic markers.
FIG. 12 is a schematic diagram of the lead vehicle and a carriage.
FIG. 13 is a schematic diagram exemplarily depicting a path of each point of the vehicle.
FIG. 14 is a descriptive diagram exemplarily depicting a target path.
FIG. 15 is a graph depicting a relation between forward gazing distance Lf and vehicle speed V.
FIG. 16 is a descriptive diagram of a control point set on the vehicle (lead vehicle) on a straight road.
FIG. 17 is a descriptive diagram of the control point set on the vehicle (lead vehicle) on a curved road.
FIG. 18 is a descriptive diagram of a method of identifying lateral deviation ey of the control point when the magnetic marker in the special area is detected.
FIG. 19 is a descriptive diagram of a method of identifying lateral deviation ey of the control point when the magnetic marker in a non-special area is detected.
FIG. 20 is a descriptive diagram of the vehicle azimuth estimated by an IMU.
FIG. 21 is a descriptive diagram of a method of identifying lateral deviation ey of control point CT during traveling midway between magnetic markers (N pole) adjacent to each other.
FIG. 22 is a graph depicting the results of a demonstration experiment when offset distance Lo is set at zero.
FIG. 23 is a graph indicating the results of a demonstration experiment when offset distance Lo is set.
FIG. 24 is a graph indicating results of vehicle control at the time of passage over the special area.
FIG. 25 is a flow diagram depicting another example of the flow of operation when magnetic marker 10 is detected.

DESCRIPTION OF EMBODIMENTS

Embodiments of the present invention are specifically described by using the following embodiments

(FIRST EMBODIMENT)

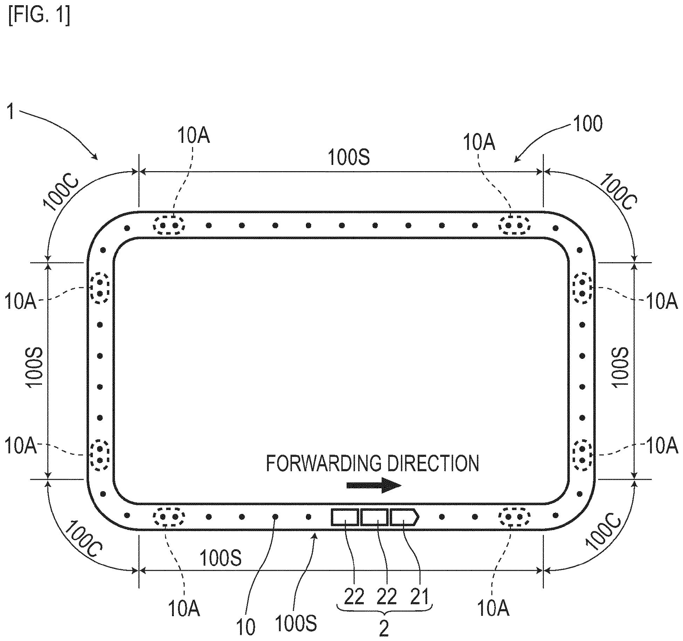

The present embodiment is an example regarding a control method and a control system 1 for traveling vehicle 2 along traveling road 100. Details of this are described by using FIG. 1 to FIG. 25.

Traveling environments of vehicle 2 are, for example, indoor environments such as in a factory and a distribution warehouse and outdoor environments in a site such as a factory. The traveling environment of vehicle 2 such as a factory or distribution warehouse is provided with, for example, traveling road 100 depicted in FIG. 1. As a target path where vehicle 2 travels, a path for traveling traveling road 100 without deviation from traveling road 100 (for example, FIG. 1) is set.

Traveling road 100 (FIG. 1) is, for example, an oval-shaped one-way circulating traveling road having a width of approximately 2 m. Traveling road 100 is configured by combining straight roads 100S and curved roads 100C. In the configuration of the present embodiment, magnetic markers 10 are arranged so as to be almost along the center of traveling road 100. Magnetic marker 10 as a magnetism generation source forms one example of a mark for vehicle 2 to travel along the target path.

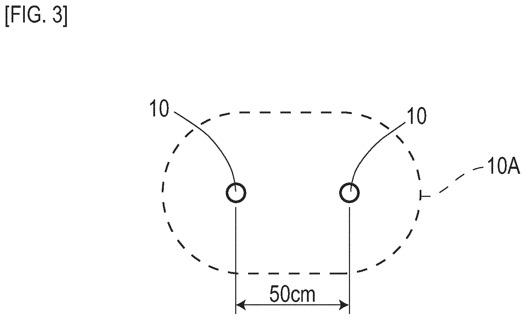

In the present embodiment, as in FIG. 1, the laying locations of magnetic markers 10 are provided with a predetermined pitch, for example, 2 meters or the like. Furthermore, among the laying locations of magnetic markers 10, special area 10A (FIG. 1 and FIG. 3) is included, where two magnetic markers 10 are arranged so as to be adjacent to each other with a shorter pitch (in the present embodiment, 0.5 meters, which is one example of a known pitch). Note that for the pitch of the laying locations of magnetic markers 10, a constant pitch is not an essential requirement. On the other hand, the pitch of magnetic markers 10 in special area 10A is required to have a prescribed distance.

In special area 10A, magnetic marker 10 on a downstream side of two magnetic markers 10 serves as a reference for the above-mentioned predetermined pitch. This magnetic marker 10 on the downstream side is positioned with the above-mentioned predetermined pitch, with respect to other magnetic markers 10 on an upstream side and a downstream side that are adjacent to each other in the direction of traveling road 100. On the other hand, magnetic marker 10 on the upstream side has a pitch with respect to another magnetic marker 10 that is adjacent on an upstream side with respect to special area 10A, the pitch being narrower than the above-mentioned predetermined pitch.

Note that in special area 10A, two magnetic markers 10 are disposed so that the upper surface of magnetic marker 10 on the upstream side has, for example, the S pole and the upper surface of magnetic marker 10 on the downstream side has, for example, the N pole. Magnetic markers 10 in a non-special area are disposed so that their upper surface has, for example, the N pole. By disposing magnetic markers 10 in this manner, it is possible for vehicle 2 side to easily detect that the vehicle has reached special area 10A, in accordance with detection of S-pole magnetic marker 10.

Special area 10A is an area for using two magnetic markers 10 and identifying an absolute azimuth (vehicle azimuth) and an absolute position (vehicle position) of vehicle 2. Two magnetic markers 10 in special area 10A have their absolute azimuths arranged along a known direction. Special area 10A is provided, for example, ahead of and immediately following curved road 100C. If special area 10A is provided ahead of curved road 100C, when the vehicle enters curved road 100C, accuracy in identifying the vehicle azimuth and the vehicle position can be enhanced, and control accuracy during traveling on curved road 100C can be highly ensured. Also, if special area 10A is provided immediately following curved road 100C, an angular error or a positional error that can occur due to fluctuations in the vehicle azimuth can be corrected immediately after passage of curved road 100C. According to this correction, it is possible to suppress a possibility of exerting an influence of the angular or the positional error on control of straight road 100S after passage of curved road 100C.

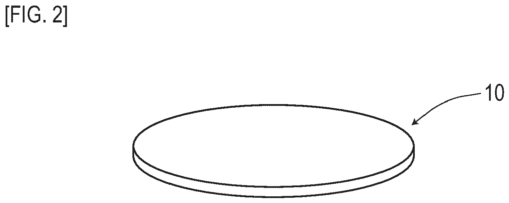

Magnetic marker 10 is, as in FIG. 2, a permanent magnet forming a sheet shape having a diameter of 50 mm and a thickness of 2 mm. Magnetic marker 10 can be laminated on a road surface forming a surface of traveling road 100. Piece-like magnetic marker 10 is easy to laminate on a floor surface, compared with a magnetic tape. For example, the magnetic tape in a linear shape is difficult to lay in a curved manner and tends to be wrinkled or the like. On the other hand, piece-like magnetic marker 10 is easy to lay on a curved road. Furthermore, since magnetic marker 10 is easy to re-laminate, it is easy to address a change in the shape of traveling road 100, such as a route change.

The magnet forming magnetic marker 10 is a ferrite rubber magnet having magnetic powder of iron oxide as a magnetic material dispersed into a polymer material as a base material. Note that a columnar magnetic marker may be adopted in place of sheet-shaped magnetic marker 10 of the present embodiment. In the case of the columnar magnetic marker, it is accommodated in a hole bored in the road surface.

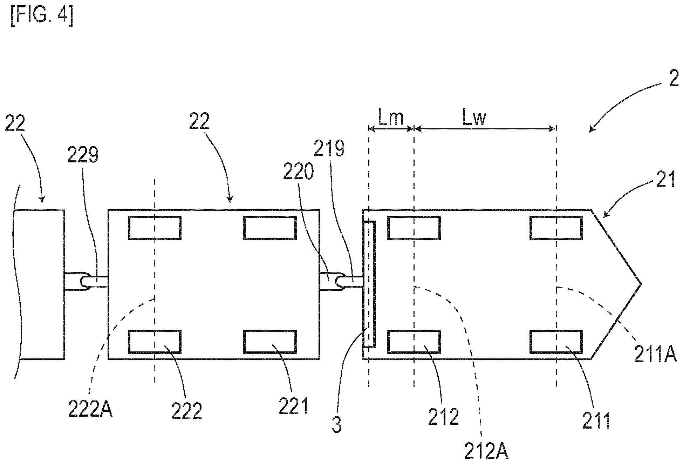

Next, vehicle 2 configuring control system 1 of the present embodiment is described. Vehicle 2 is configured of, as in FIG. 4, lead vehicle 21 having driving wheels and carriages 22 having four wheels to be towed by this lead vehicle 21. Lead vehicle 21 has a length of 2 meters and a width of 1 meter, and each carriage 22 has a length of 2 meters and a width of 1 meter.

Lead vehicle 21 has paired left and right front wheels 211, which are steered wheels, and rear wheels 212, which are driving wheels. Rear wheels 212 are fixed wheels with the axial direction of the rotation axis fixed. A rear portion of lead vehicle 21 is provided with tow hook 219 for towing carriage 22. Also, rod-shaped magnetic sensor array 3 is attached to the rearmost end of lead vehicle 21. Note in the present embodiment that a wheelbase between front wheel axis 211A and rear wheel axis 212A is set as Lw and a distance between magnetic sensor array 3 and rear wheel axis 212A is set as Lm.

Carriage 22 includes coupling bar 220 for coupling to lead vehicle 21 or preceding carriage 22 and coupling hook 229 for coupling to subsequent carriage 22. Carraige 22 includes paired left and right driven wheels 221 at front and paired left and right fixed wheels 222 at rear. To lead vehicle 21, a plurality of carriages 22 can be coupled.

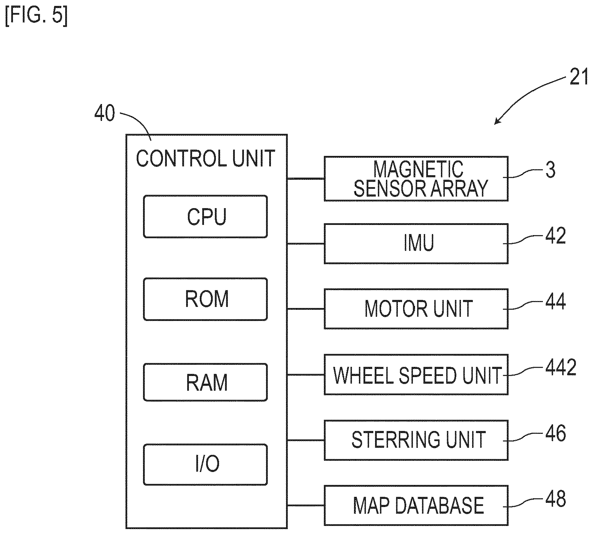

The system configuration of lead vehicle 21 is described with reference to FIG. 5. Lead vehicle 21 is configured to include magnetic sensor array 3 (one example of a device) that performs magnetism detection, control unit 40 that controls traveling of vehicle 2, IMU (Inertial Measurement Unit) 42 for achieving inertial navigation, motor unit 44 that rotatably drives rear wheels 212, steering unit 46 that steers front wheels 211 as steered wheels, and so forth.

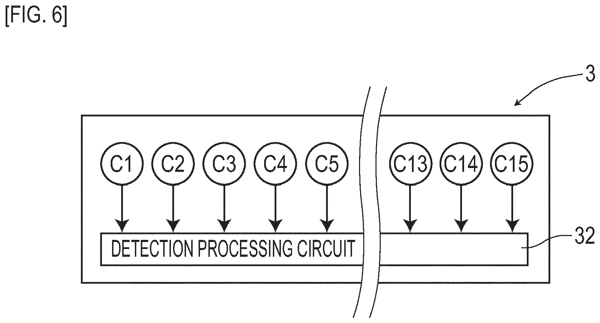

Magnetic sensor array 3 (FIG. 6) is a rod-shaped unit where a plurality of magnetic sensors Cn are arrayed in a straight line. Magnetic sensor array 3 is attached so as to be along a vehicle-width direction of lead vehicle 21 (refer to FIG. 4). In particular, in the configuration of the present embodiment, magnetic sensor array 3 is attached to the rearmost end of lead vehicle 21, which corresponds to a rear side of rear wheel axis 212A (FIG. 4). The attachment height of magnetic sensor array 3 with reference to the floor surface of traveling road 100 (FIG. 1) is 100 mm.

Magnetic sensor array 3 (FIG. 6) includes fifteen magnetic sensors Cn (n is an integer of 1 to 15) arrayed in the straight line and detection processing circuit 32 having incorporated therein a CPU and so forth not depicted. In rod-shaped magnetic sensor array 3, fifteen magnetic sensors Cn are arrayed along its longitudinal direction with 5 cm pitches. When magnetic sensor array 3 is attached to lead vehicle 21 so as to be along the vehicle-width direction, fifteen magnetic sensors Cn are arrayed in the straight line along the vehicle-width direction (lateral direction) of vehicle 2 (lead vehicle 21). In the configuration of the present embodiment, magnetic sensor C1 is positioned on a left side of vehicle 2 (lead vehicle 21) and magnetic sensor C15 is positioned on a right side of vehicle 2.

Magnetic sensors Cn are sensors that detect magnetism by using the known MI effect (Magneto Impedance Effect), in which the impedance of a magneto-sensitive body such as an amorphous wire sensitively changes in response to the external magnetic field. Magnetic sensors Cn each have magnetic sensitivity in a longitudinal direction (axial direction) of an amorphous wire in a linear shape.

In each magnetic sensor Cn, one amorphous wire is disposed so as to be along each of two axes orthogonal to each other. In magnetic sensor array 3, fifteen magnetic sensors Cn are incorporated so that the axial directions of two amorphous wires coincide between fifteen magnetic sensors Cn. Magnetic sensor array 3 is attached to lead vehicle 21 so that each magnetic sensor Cn can detect magnetic components in a forwarding direction and the vehicle-width direction. Note that the forwarding direction is a direction coinciding with the longitudinal direction of vehicle 2 (lead vehicle 21).

Detection processing circuit 32 (FIG. 6) included in magnetic sensor array 3 is an arithmetic circuit that performs marker detection process for detecting magnetic marker 10. Detection processing circuit 32 is configured of, although omitted in the drawings, a CPU (central processing unit) that performs various arithmetic operations, memory elements such as ROM (read only memory), RAM (random access memory), and so forth.

Detection processing circuit 32 obtains a sensor signal outputted from each magnetic sensor Cn with a frequency of 3 kHz, and performs marker detection process. Detection processing circuit 32 inputs the detection result of the marker detection process to control unit 40. Although details will be described further below, in this marker detection process, in addition to detection of magnetic marker 10, deviation with respect to magnetic marker 10 in the lateral direction (vehicle-width direction) is measured and identified. Magnetic marker 10 is one example of a mark. The deviation with respect to magnetic marker 10 in the lateral direction is one example of a relative position with respect to magnetic marker 10.

IMU 42 (FIG. 5) is a unit that estimates a relative position, the vehicle azimuth, and so forth of lead vehicle 21 by inertial navigation. Although not depicted in the drawings, IMU 42 includes: a biaxial magnetic sensor, which is an electronic compass that measures azimuth; a biaxial acceleration sensor that measures acceleration; a biaxial gyro sensor that measures angular velocity about a yaw axis; and so forth. Here, the yaw axis is an axis in a vertical direction.

IMU 42 calculates a displacement amount by double integration of the measured acceleration and also calculates a relative azimuth of lead vehicle 21 by integration of the measured angular velocity. By adding this relative azimuth to a reference azimuth (absolute azimuth), IMU 42 estimates the vehicle azimuth from moment to moment. Note that as the reference azimuth of inertial navigation, for example, the absolute azimuth when vehicle 2 is parked at a predetermined parking position or the absolute azimuth (vehicle azimuth) of vehicle 2 identified in special area 10A can be used. By adding up each displacement amount along the vehicle azimuth from moment to moment, IMU 42 estimates the relative position (displacement position) with respect to the vehicle position the absolute position of which is known.

Note that every time the vehicle position (absolute position) is identified in accordance with detection of magnetic marker 10, the reference position of inertial navigation is updated with that vehicle position and the relative position is reset to zero. The vehicle position can be identified in accordance with detection of magnetic marker 10, irrespective of whether the vehicle is in special area 10A. Although details are described further below, in special area 10A the absolute position (vehicle position) of vehicle 2 can be more accurately identified.

Control unit 40 is a unit that controls traveling of lead vehicle 21. Control unit 40 controls the steered angle of front wheels 211 and rotational angular velocity of rear wheels 212 via steering unit 46 or motor unit 44. Control unit 40 includes electronic circuits (omitted in the drawings) including a CPU that performs various arithmetic operations, memory elements such as ROM and RAM, and so forth. In a storage area of the ROM, vehicle spec information is stored, such as distance Lm between magnetic sensor array 3 and rear wheel axis 212A in the longitudinal direction, wheelbase Lw between front wheel axis 211A and rear wheel axis 212A, and so on. Also, the RAM is provided with a storage area for correction flags. Correction flags are control flags for performing the position correction, which is the correction of the vehicle position, and the angle correction, which is the correction of the vehicle azimuth, in special area 10A.

In addition to magnetic sensor array 3, steering unit 46, and motor unit 44, map database 48 and wheel speed unit 442, which outputs a pulse in accordance with the rotation of rear wheels 212, are connected to control unit 40. Control unit 40 identifies vehicle speed by using the pulse outputted from wheel speed unit 442.

Map database 48 is a database that stores map data representing the shape of traveling road 100. On a map represented by the map data, N-pole magnetic markers 10 disposed on traveling road 100 are linked. With reference to the map data, the position of each N-pole magnetic marker 10 can be identified. Note that N-pole magnetic markers 10 are magnetic markers except S-pole magnetic markers on the upstream side of special area 10A. Also, to N-pole magnetic markers 10 on the downstream side of special area 10A, the azimuth data of special area 10A is linked. The azimuth data is data indicating absolute azimuth of a line segment connecting two magnetic marker 10 in special areas 10A.

To the map data, a target path when vehicle 2 travels can be allocated. The target path is set as appropriate in accordance with a path where vehicle 2 is caused to pass and is allocated to the map data. With reference to the map data, the target path can be identified at each position on traveling road 100 in a forwarding direction.

In the present embodiment, for both of straight roads 100S and curved roads 100C, as a path vehicle 2 is cause to pass, a path is set through which magnetic sensor C8 positioned at the center of magnetic sensor array 3 passes directly above magnetic markers 10. In the present embodiment, a line smoothly connecting magnetic markers 10 is set as a target path. Note that, in place of this, for example, if it is desired that vehicle 2 be caused to travel as being shifted to right with respect to magnetic markers 10, a target path shifted to right with respect to the line smoothly connecting magnetic markers 10 is preferably set. Alternatively, if it is desired that vehicle 2 be caused to travel as passing directly above magnetic markers 10 on straight roads 100S and, on the other hand, as making a longer turn than the line smoothly connecting magnetic markers 10 on curved roads 100C, the positional relation of the target path with respect to the line smoothly connecting magnetic markers 10 is preferably varied between straight road 100S and curved road 100C. That is, while the target path matching the line smoothly connecting magnetic markers 10 is set on straight roads 100S, the target path expanding to the outside of the curve with respect to the line smoothly connecting magnetic markers 10 is preferably set on curved roads 100C. In this manner, the relation between magnetic markers 10 and the target path is not univocal but is varied as appropriate in accordance with the path through which vehicle 2 is desired to be caused to travel (path through which the vehicle is caused to pass), the specifications of vehicle 2, the traveling situation of vehicle 2 such as the vehicle speed, or the like.

Control unit 40 inputs control target values to steering unit 46 and motor unit 44. The control target value to steering unit 46 is a designated steered angle, which is a control target of the steered angle of front wheels 211. The control target value to motor unit 44 is designated rotational angular velocity, which is a control target of the rotational angular velocity of rear wheels 212.

Control unit 40 includes functions as circuits each described below.

(1) Circuit that obtains an absolute position (vehicle position) of vehicle 2: By using the marker detection result, the relative position estimated by IMU 42, or the like, the circuit calculates and obtains the vehicle position.

(2) Circuit that obtains an absolute azimuth (vehicle azimuth) of vehicle 2: the circuit obtains the absolute azimuth of vehicle 2 by identifying vehicle azimuth by using magnetic markers 10 in special area 10A, or by reading out vehicle azimuth estimated by IMU 42.

(3) Circuit that sets a control point: the circuit sets the control point (forward gazing point) at a position ahead of magnetic sensor array 3 by a forward gazing distance.

(4) Circuit that sets the target path: the circuit calculates and sets the target path through which the control point should pass. Note that, as described above, in the present embodiment, the line smoothly connecting magnetic markers 10 is set as the target path and allocated to the map data.

(5) Circuit that identifies deviation of the control point in the lateral direction: the circuit converts deviation with respect to magnetic marker 10 in the lateral direction into deviation (lateral deviation) of the control point with respect to the target path in the lateral direction.

(6) Circuit that calculates the control target value: the circuit calculates the control target value such as the designated steered angle, based on the deviation (lateral deviation) of the control point in the lateral direction.

In the following, (a) marker detection process, (b) switching operation at the time of marker detection, (c) azimuth identifying process in special area 10A, (d) target path setting, (e) control method, (f) control point setting, (g) identification of deviation of control point in lateral direction, and (h) control result, in control system 1 of the present embodiment are sequentially described. Here, the control point is a control object point to be caused to follow the target path and, in the present embodiment is set ahead of magnetic sensor array 3.

(a) Marker Detection Process

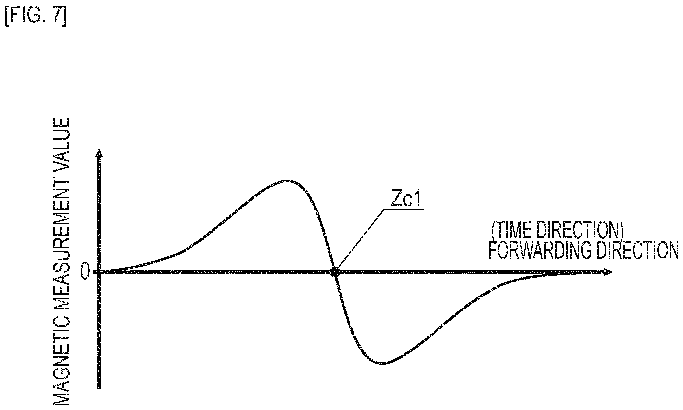

Marker detection process is a process to be performed by magnetic sensor array 3 forming one example of the device. As described above, magnetic sensor array 3 performs marker detection process with a frequency of 3 kHz. Magnetic sensors Cn can measure the magnetic components in the forwarding direction (longitudinal direction) and the vehicle-width direction of vehicle 2 (head vehicle 21). For example, when this magnetic sensor Cn moves in the forwarding direction and passes directly above magnetic marker 10, the sign of the magnetic measurement value in the forwarding direction is reversed before and after magnetic marker 10 as in FIG. 7, and the magnetic measurement value temporally changes so as to cross zero at a position directly above magnetic marker 10. During traveling of vehicle 2, for the magnetic measurement value in the forwarding direction detected by any magnetic sensor Cn, when zero-cross Zc1 where its sign is reversed occurs, it can be determined that magnetic sensor array 3 is positioned directly above magnetic marker 10. As described above, when magnetic sensor array 3 is positioned directly above magnetic marker 10 and zero-cross Zc1 of the magnetic measurement value in the forwarding direction occurs, detection processing circuit 32 determines that magnetic marker 10 has been detected.

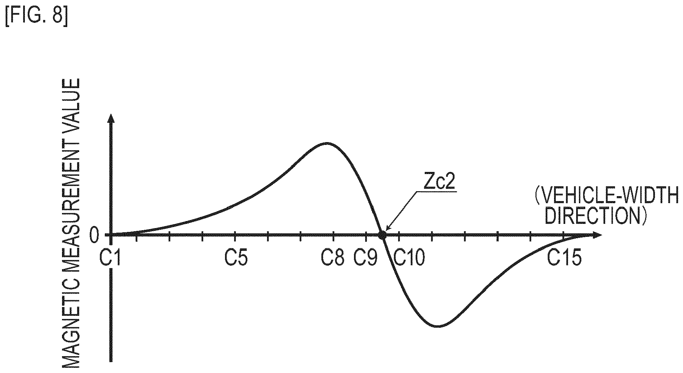

Also, for example, for a magnetic sensor having the same specifications as those of magnetic sensors Cn, a movement along the vehicle-width direction passing directly above magnetic marker 10 is assumed. In this case, the magnetic measurement value in the vehicle-width direction is changed so that its sign is reversed on both sides interposing magnetic marker 10 and the magnetic measurement value crosses zero at the position directly above magnetic marker 10. In magnetic sensor array 3 where fifteen magnetic sensors Cn are arrayed in the vehicle-width direction, the sign of the magnetic measurement value in the vehicle-width direction detected by magnetic sensor Cn is switched depending on the side on which the magnetic sensor is present via magnetic marker 10 (FIG. 8).

FIG. 8 depicts an approximate curve of a distribution of magnetic measurement values in the vehicle-width direction of respective magnetic sensors Cn. In the distribution curve of the drawing, zero-cross Zc2 where the sign of the magnetic measurement value in the vehicle-width direction is reversed appears directly above magnetic marker 10. The position of zero-cross Zc2 in the drawing represents the position of magnetic marker 10 in the vehicle-width direction (lateral direction). The position of magnetic marker 10 in the vehicle-width direction can be identified as, for example, a position between magnetic sensors Cn adjacent to each other and having zero-cross Zc2 interposed therebetween.

Detection processing circuit 32 measures deviation of vehicle 2 (lead vehicle 21) in the lateral direction (vehicle-width direction) with respect to magnetic marker 10. In the present embodiment, magnetic sensor C8 at the center of magnetic sensor array 3 is on the center axis of vehicle 2 (lead vehicle 21). For example, in the case of FIG. 8, the position of zero-cross Zc2 corresponding to magnetic marker 10 is a position corresponding to C9.5 nearly midway between C9 and C10. As described above, since the pitch between magnetic sensors C9 and C10 is 5 cm, the deviation (relative position) of vehicle 2 (lead vehicle 21) in the lateral direction with respect to magnetic marker 10 is $(9.5-8) \times 5$ cm=7.5 cm with reference to magnetic sensor C8. The example of the drawing is an example when vehicle 2 (lead vehicle 21) is shifted to left in traveling road 100. Note that the sign of the deviation in the lateral direction is negative when the target point of the vehicle is shifted to left with respect to magnetic marker 10 and is positive when the target point is shifted to right.

(b) Switching Operation at the time of Marker Detection

In control system 1 of the present embodiment, operation is switched in accordance with the type of detected magnetic marker 10. As the type of magnetic marker 10, there are magnetic markers 10 in special area 10A and magnetic markers 10 in a non-special area, and also magnetic markers 10 on the upstream side of special area 10A and magnetic markers 10 on the downstream side thereof. As described above, only magnetic markers 10 on the upstream side of special area 10A have their upper surfaces with the S pole, and all of other magnetic markers 10 have their upper surfaces with the N pole. In the configuration of the present embodiment, N-pole magnetic markers 10 are used to identify the vehicle position.

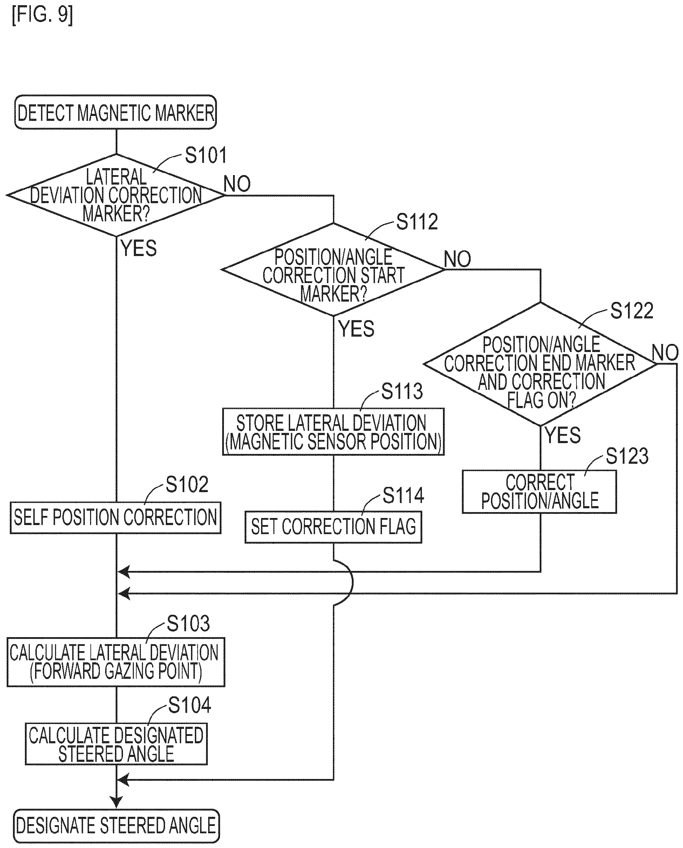

Details of the switching operation in accordance with the type of detected magnetic marker 10 are described with reference to a flow diagram of FIG. 9. The process flow of the drawing indicates a flow of process following detection of magnetic marker 10, irrespective of whether the pole is the N pole or the S pole.

When detected magnetic marker 10 is a lateral deviation correction marker, which is N-pole magnetic marker 10 in a non-special area (S101: YES), self position correction is performed with the vehicle position identified based on this magnetic marker 10 (S102). Note that in the configuration of the present embodiment, detected magnetic marker 10 is identified as the magnetic marker in the non-special area, when the magnetic polarity of the upper surface of detected magnetic marker 10 is the N pole and the above-described correction flag is OFF. This vehicle position is set to a new reference position in inertial navigation, and the relative position estimated by IMU 42 is thereby zero-reset. Then, deviation (lateral deviation) of the control point, which is the forward gazing point, in the lateral direction is calculated and identified (S103). At this step S103, lateral deviation is identified based on the vehicle position identified based on detected magnetic marker 10 and the vehicle azimuth estimated by inertial navigation. Then, the designated steered angle of front wheels 211, which are steered wheels, is calculated from this lateral deviation (S104).

When detected magnetic marker 10 is a position/angle correction start marker, which is S-pole magnetic marker 10 on the upstream side of special area 10A (S101: NO→S112: YES), the deviation of vehicle 2 in the lateral direction with respect to this magnetic marker 10 is stored and held (S113), and the above-described correction flag is set to ON (S114). This correction flag is a control flag for performing position correction regarding the vehicle position and angle correction regarding the vehicle azimuth in accordance with detection of N-pole magnetic marker 10 on the downstream side of special area 10A.

Note that while the correction flag is ON, calculation of lateral deviation of the control point, which is the forward gazing point, and the designated steered angle is not performed (S114→designate steered angle). With this, after the vehicle passes over S-pole magnetic marker 10 on the upstream side of special area 10A and until the vehicle reaches N-pole magnetic marker 10 on the downstream side, the designated steered angle immediately before the detection of S-pole magnetic marker 10 is maintained as it is. By maintaining the designated steered angle, a change in the steered angle of front wheels 211, which are steered wheels, can be suppressed.

When detected magnetic marker 10 is a position/angle correction end marker, which is N-pole magnetic marker 10 in special area 10A and the correction flag is ON (S101: NO→S112: NO→S122: YES), position correction regarding the vehicle position and angle correction regarding the vehicle azimuth are performed (S123). Position correction is positional correction with the vehicle position identified based on detected magnetic marker 10. Angle correction is angular correction with the vehicle azimuth identified by using two magnetic markers in special area 10A.

When position correction is performed, the identified vehicle position is set at the new reference position of inertial navigation, and also the relative position estimated by IMU 42 is zero-reset. When angle correction is performed, the identified vehicle azimuth is set at a new reference azimuth of inertial navigation, and also the relative azimuth estimated by IMU 42 is zero-reset. Furthermore, deviation of the control point, which is the forward gazing point, in the lateral direction is calculated and identified (S124) and, with this lateral deviation, the designated steered angle of front wheels 211, which are steered wheels, is calculated (S104).

Note that after any N-pole magnetic marker 10 is detected and until new N-pole magnetic marker 10 is detected (S101: NO^-S112: NO^-S122: NO), lateral deviation of the control point, which is the forward gazing point, is calculated (S103). At this step S103, lateral deviation is calculated based on the vehicle position and vehicle azimuth estimated by inertial navigation. Then, the designated steered angle in accordance with this lateral deviation is calculated (S104).

(c) Azimuth Identifying Process (Special Area 10A)

Azimuth identifying process is a process of identifying the absolute azimuth (vehicle azimuth) of vehicle 2 by using two magnetic markers 10 arranged in special area 10A. The azimuth identifying process is performed by control unit 40.

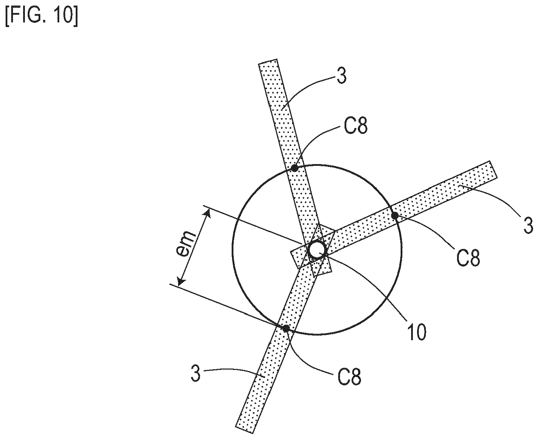

Here, a method of identifying vehicle azimuth by using special area 10A is generally described. As in FIG. 10, when only one magnetic marker 10 is present, even if deviation em in the lateral direction with respect to magnetic marker 10 is identified by the above-described marker detection process, the posture of magnetic sensor array 3 positioned directly above magnetic marker 10 is indefinite. Note that deviation em in the lateral direction with respect to magnetic marker 10 is deviation of magnetic sensor C8 positioned at the center of magnetic sensor array 3 with respect to magnetic marker 10. A circle in the drawing is a circle having a radius of deviation em with respect to magnetic marker 10. In this manner, if only deviation em in the lateral direction with respect to magnetic marker 10 is identified, the posture of magnetic sensor array 3 in a circumferential direction of the circle in the drawing is indefinite, and it is impossible to identify vehicle azimuth.

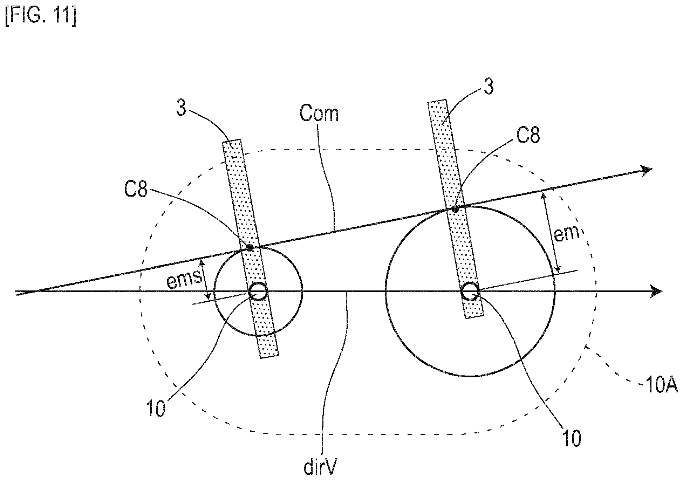

On the other hand, in special area 10A, as in FIG. 11, in addition to deviation em in the lateral direction with respect to magnetic marker 10 (N pole), deviation ems in the lateral direction with respect to an S-pole magnetic marker that is adjacent on the upstream side can be identified. In this manner, if deviations in the lateral direction with respect to two magnetic markers 10 are identified, a direction orthogonal to a common tangent Com of a circle having a radius of deviation ems in the lateral direction and a circle having a radius of deviation em in the lateral direction can be identified as the longitudinal direction of magnetic sensor array 3. With this, the posture of magnetic sensor array 3 when passing over two magnetic markers 10 can be identified. Common tangent Com in the drawing is a moving path of vehicle 2, and the orientation of common tangent Com is vehicle azimuth.

In special area 10A, the line segment connecting two magnetic markers 10 is along known direction dirV, and two magnetic markers 10 are adjacent to each other with the known pitch (in the present embodiment, 0.5 m). Deviation in azimuth of the above-described common tangent with respect to known direction dirV can be identified in FIG. 11. If deviation of vehicle azimuth (orientation of common tangent Com) with respect to known direction dirV of the line segment connecting two magnetic markers 10 can be identified, by angularly shifting the absolute azimuth indicating known direction dirV by this azimuth deviation, it is possible to identify the absolute azimuth (vehicle azimuth) of the vehicle.

Note that, although details will be described further below, when magnetic marker 10 (N-pole) on the downstream side of special area 10A is detected, by using the vehicle azimuth identified as described above, it is possible to identify a two-dimensional position (absolute position) of the vehicle with reference to magnetic marker 10 with high accuracy.

(d) Target Path Setting

The target path is a path of a target of controlling the control point, set to vehicle 2 so as to satisfy the following two conditions. A first condition is a condition in which not only lead vehicle 21 but also all carriages 22 coupled to lead vehicle 21 travel in traveling road 100. A second condition is a condition in which magnetic sensor array 3 passes over magnetic marker 10 and can detect magnetic marker 10.

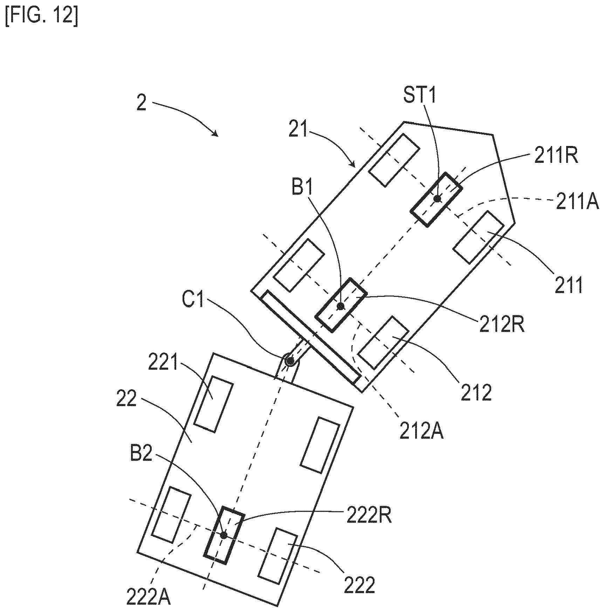

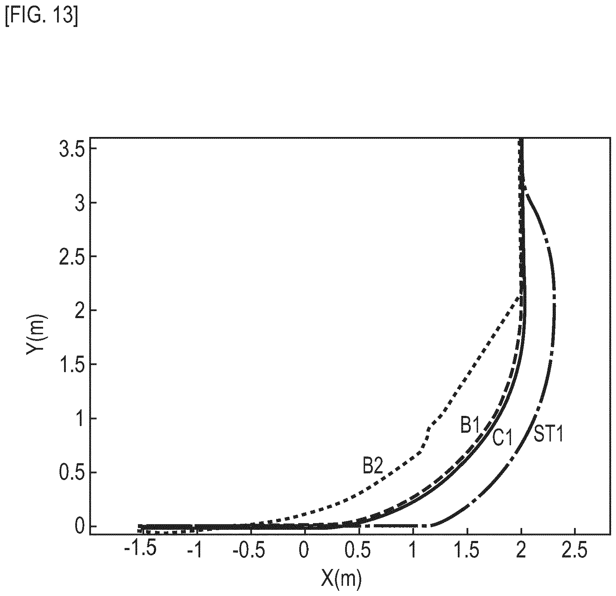

Here, a difference of a path through which each point of vehicle 2 passes is described with reference to FIG. 12 and FIG. 13. FIG. 12 is a drawing for describing the arrangement of each point of vehicle 2 including lead vehicle 21 and carriage 22. FIG. 13 is a drawing exemplarily depicting each path through which each point (FIG. 12) of vehicle 2 passes.

The points of FIG. 12 are center point ST1 of front wheel axis 211A of lead vehicle 21, center point B1 of rear wheel axis 212A, point C1 corresponding to a coupling point between lead vehicle 21 and carriage 22, and center point B2 of wheel axis 222A, which is the axis of driven wheels 222 of carriage 22. Note in FIG. 12 that, for easy understanding, virtual wheels 211R, 212R, and 222R are depicted at the center of wheel axes 211A, 212A, and 222A.

For example, a path of each point when vehicle 2 turns left at a right angle to pass over a corner is as indicated in FIG. 13. Point B1 and point C1 pass over paths that are approximately similar. On the other hand, point ST1 takes a path of a long turn, and point B2 takes a path of a short turn. In this manner, the path when vehicle 2 passes over the corner at the right angle is varied at each point.

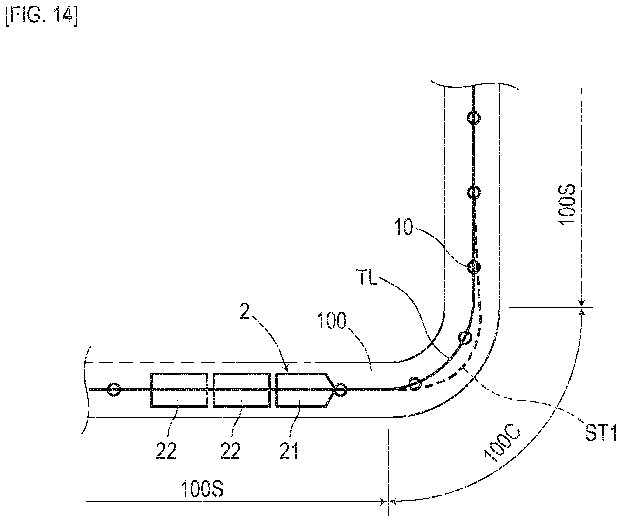

On the other hand, the target path is constant irrespectively of the position of the control point and, in the present embodiment, the target path is set so as to match the line smoothly connecting magnetic markers 10. For example, target path TL when vehicle 2 travels traveling road 100, which is an oval-shaped circulating traveling road depicted in FIG. 1, is as indicated by a solid line in FIG. 14. For example, when center point ST1 of front wheel axis 211A is the control point, an actual path of point ST1 indicated by a broken line in the drawing almost matches target path TL on straight road 100S. On the other hand, the path (broken line) of point ST1 on curved road 100C is a path of a long turn passing outside of target path TL. The steered angle of vehicle 2 is controlled in accordance with deviation of the path (broken line) of point ST1 with respect to target path TL (solid line).

Control system 1 of the present embodiment is a system in which the steered angle of the steered wheel (front wheel 211) is controlled so that deviation (lateral deviation) of the control point in the lateral direction with respect to target path TL is suppressed to become closer to zero. In the present embodiment, target path TL is allocated to the map data stored in map database 48. With reference to the map data read out from map database 48, control unit 40 reads out target path TL. If the vehicle position and the vehicle azimuth at that time are known, deviation in the lateral direction with respect to target path TL and azimuth (absolute azimuth) of target path TL can be identified.

Note that target path TL may be determined and set as occasion arises by arithmetic operation by control unit 40. For example, there may be a case in which it is better to change a path causing the center of magnetic sensor array 3 (magnetic sensor C8) to pass in accordance with the speed of vehicle 2 and the curvature of traveling road 100. That is, there may be the case in which it is better to change a positional deviation of magnetic sensor C8 with respect to magnetic marker 10 in accordance with the speed of vehicle 2 and the curvature of traveling road 100. In this case, control unit 40 may determines, as occasion arises, target path TL by arithmetic operation in accordance with the speed of vehicle 2 and the curvature of traveling road 100. At this time, target path TL determined by arithmetic operation is allocated to the map data as occasion arises. Furthermore, target paths TL of a plurality of types may be prepared in advance in accordance with the specifications of the vehicle such as the inner wheel difference and the vehicle speed, and those target paths TL of the plurality of types may be allocated to the map data. Control unit 40 can selectively read out any target path TL in accordance with the specifications of the vehicle and the vehicle speed.

(e) Control Method

The control method by control system 1 of the present embodiment is a control method by control with 2 degrees of freedom by combining feedforward control and feedback control together. Feedforward control is control of calculating designated steered angle $\delta$ in accordance with the curvature of target path TL. Feedback control is control of calculating designated steered angle $\delta$ based on deviation (lateral deviation) of control point CT in the lateral direction with respect to target path TL. Designated steered angle $\delta$ can be obtained by the following control equation.

$$[\text{Equation 1}]$$

$$\text{Designated steered angle } \delta$$

$$= \text{Feedback term } \delta fb + \text{Feedforward term } \delta ff$$

$$= \text{Feedback gain Ky} \times \text{Lateral deviation ey} + \text{Feedforward term } \delta ff$$

In Equation 1, feedback gain Ky is determined so that rectilinear stability during traveling on straight road 100S (refer to FIG. 1) and convergence properties of deviation in the lateral direction can be both achieved. Feedforward term $\delta ff$ is a term for providing the steered angle in accordance with the curvature in order to compensate for a control delay on curved road 100C (refer to FIG. 1). When a transverse gradient occurs, a steered angle can be added to feedforward term $\delta ff$ to generate a lateral force that matches the components of gravity in the lateral direction and compensates for the transverse gradient. The steered angle can be obtained by detecting a tilt of vehicle 2 by IMU 42.

(f) Control Point Setting

In control system 1 of the present embodiment, in vehicle 2 (lead vehicle 21), a response delay of vehicle 2 is compensated for by setting control point CT not at the position of magnetic sensor array 3 but at a position ahead of magnetic sensor array 3. Furthermore, in the configuration of the present embodiment, by contriving the setting position of control point CT, stability on straight road 100S and followability on curved road 100C are both achieved.

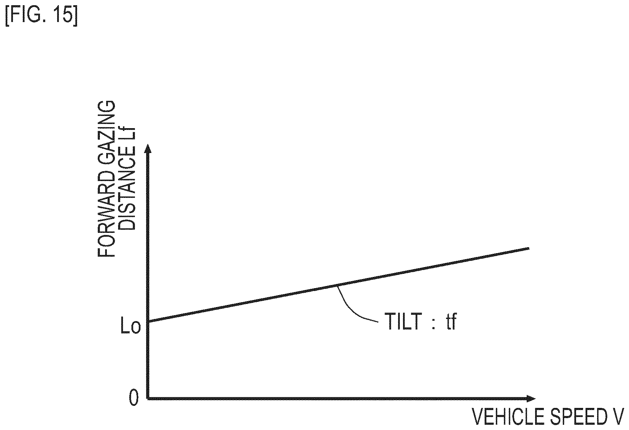

In the present embodiment, with reference to the position of magnetic sensor array 3 (one example of a device) in the longitudinal direction of vehicle 2 (lead vehicle 21), forward gazing distance Lf, which is a distance to control point CT, is defined as in the following equation. FIG. 15 is a graph of forward gazing distance Lf with respect to vehicle speed V. In the drawing, vehicle speed V is set on the horizontal axis, and forward gazing distance Lf is set on the vertical axis.

$$[\text{Equation 2}]$$

$$\text{Forward gazing distance Lf}$$

$$= \text{Vehicle speed V} \times \text{Forward gazing time tf} + \text{Offset distance Lo}$$

In the arithmetic equation of forward gazing distance Lf, the term of vehicle speed V×Forward gazing time tf is a term for enhancing followability to target path TL by setting control point CT more ahead as the speed increases. The forward gazing time tf has a control meaning that the forward position to be reached after tf seconds is used to control the steered angle. Forward gazing time tf appears as the gradient of a straight line exemplarily depicted in the graph of FIG. 15.

Offset distance Lo is a term for appropriately ensuring forward gazing distance Lf even when the speed of vehicle 2 is low. By setting offset distance Lo, control point CT can be set at a forward position to a certain degree even when the vehicle 2 is at low speed, allowing followability and responsiveness to be ensured. In particular, in the present embodiment, as described next, by changing setting of offset distance Lo between the time of linear traveling and the time of curved traveling, rectilinear stability of vehicle 2 at linear traveling and followability to target path TL at curved traveling are both achieved. Offset distance Lo appears as an intercept of the straight line exemplarily depicted in the graph of FIG. 15.

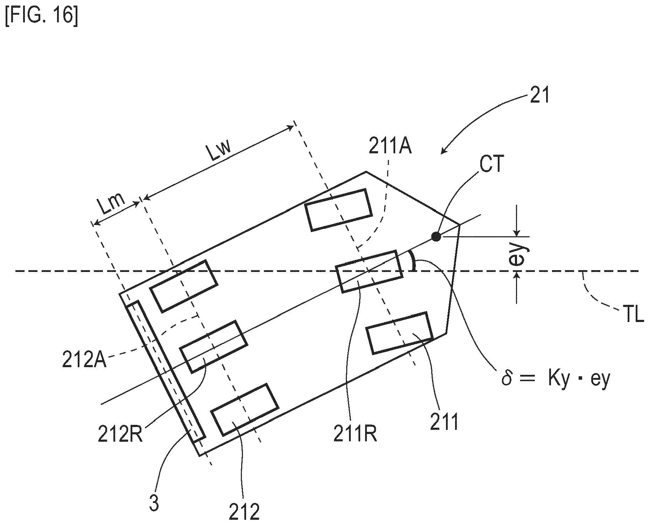

A method of setting offset distance Lo at linear traveling is described with reference to FIG. 16. When target path TL goes straight, to improve rectilinear stability, offset distance Lo equal to or longer than a distance (Lw+Lm) between front wheel axis 211A and magnetic sensor array 3 is set so that control point CT is positioned ahead of front wheel axis 211A. Note in the drawing that virtual wheel 212R that typifies paired left and right rear wheels 212 is depicted and virtual wheel 211R that typifies paired left and right front wheels 211 is depicted. The deviation of control point CT in the lateral direction with respect to target path TL is denoted as dimension ey.

In a situation in which a lateral slip angle of front wheels 211 when vehicle 2 travels at low speed is sufficiently small, vehicle 2 of front-wheel steering proceeds to a direction to which front wheels 211 are oriented. If control point CT is positioned behind front wheel axis 211A, steering starts after the center position of front wheel axis 211A overruns target path TL. In this case, front wheels 211 always overrun target path TL, and meandering occurs. Forward gazing distance Lf is set so that control point CT is positioned at the position of front wheel axis 211A or a position ahead of front wheel axis 211A. In this case, steering can be started before front wheels 211 overruns target path TL, and vehicle 2 can be controlled so as not to overrun target path TL.

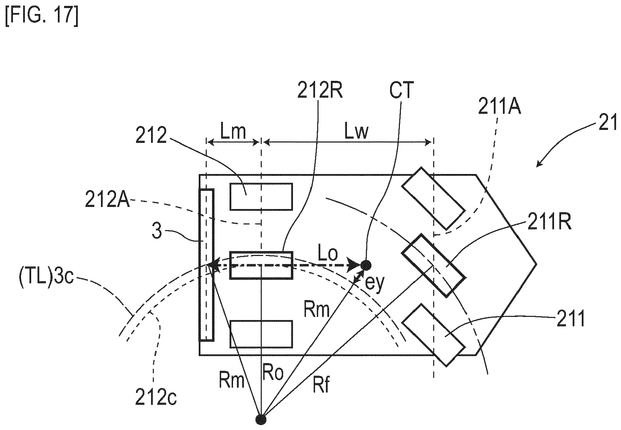

Next, a method of setting offset distance Lo at curved traveling is described with reference to FIG. 17. This setting method is a method based on the assumption that vehicle 2 travels at low speed and the lateral slip angle is sufficiently small at each wheel. If the lateral slip angle is sufficiently small at each wheel, the orientation (vehicle azimuth) of vehicle 2 is uniquely defined in accordance with the steered angle of front wheels 211.

Path 3C in FIG. 17 is an arc having radius Rm, which is a path through which the center (the position of magnetic sensor C8) of magnetic sensor array 3 passes. Path 212C is an arc having radius Ro, which is a path through which virtual wheel 212R passes. Note in the drawing that a path through which virtual wheel 211R passes is represented by an arc having radius Rf.

At curved traveling, offset distance Lo is set by placing importance on followability to target path TL. First, in the configuration of the present embodiment, a path passing over magnetic markers 10 is set as target path TL. With this, radius Rm of path 3C, which is target path TL that the center of magnetic sensor array 3 should pass through, can be determined. Here, offset distance Lo changes in accordance with radius Rm of the arc forming path 3C.

Radius Rf of the path through which virtual wheel 211R corresponding to front wheels 211 passes can be calculated by the following Equation 3 and Equation 4.

[Equation 3]

$$ Ro = \sqrt{Rm^2 - Lm^2} $$

[Equation 4]

$$ Rf = \sqrt{Ro^2 + Lw^2} $$

When vehicle 2 travels at sufficiently low speed, the control equation of the above Equation 1 becomes as the following Equation 5.

[Equation 5]

$$ \delta = Ky \cdot ey + \delta ff = \frac{Lw}{Rf} $$

$$ \delta ff = K(1 + Ksf)\frac{Lw}{Rf} $$

By expanding Equation 5, it is possible to derive the following equation regarding lateral deviation ey of control point CT.

[Equation 6]

$$ ey = (Lw/Rf - \delta ff)/Ky $$

By using lateral deviation ey of control point CT, it is possible to represent forward gazing distance Lf as follows.

[Equation 7]

$$Lo = \sqrt{(Rm+ey)^2 - Ro^2} + Lm$$

Offset distance Lo can be determined as above at linear traveling and curved traveling. Control point CT is set at the position shifted ahead from magnetic sensor array 3 by forward gazing distance Lf including offset distance Lo in the longitudinal direction of vehicle 2. Note that in control system 1 of the present embodiment, a range is provided to offset distance Lo at curved traveling. The lower limit of the range is a distance twice as long as Lm, and the upper limit is the offset distance set at linear traveling. The distance twice as long as Lm, which is the lower limit of offset distance Lo, is offset distance Lo when ey=zero in the above-described Equation 7.

(g) Identification of Deviation of Control Point in Lateral Direction

The method by which control unit 40 identifies deviation of control point CT in the lateral direction varies between (e.1) when N-pole magnetic marker 10 is detected and (e.2) when vehicle 2 is positioned midway between N-pole magnetic markers 10 adjacent to each other.

(e.1) When N-Pole Magnetic Marker Is Detected

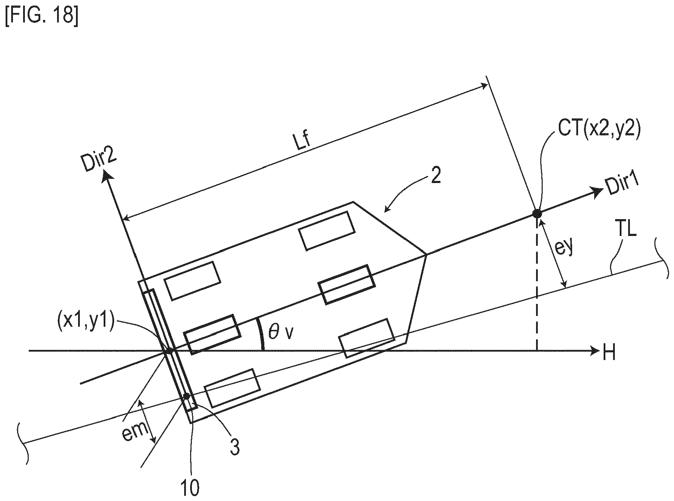

When N-pole magnetic marker 10 is detected, control unit 40 first obtains deviation em in the lateral direction measured by marker detection process, irrespective of whether the magnetic marker is magnetic marker 10 in special area 10A or magnetic marker 10 in the non-special area. Also, control unit 40 obtains the relative position estimated by IMU 42, and identifies, as the vehicle position estimated by inertial navigation, a position obtained by shifting to the vehicle-width direction by the relative position with reference to the reference position. The reference position serving as a starting point when IMU 42 estimates the relative position is the vehicle position identified at the time of previous detection of N-pole magnetic marker 10. Control unit 40 identifies N-pole magnetic marker 10 (the nearest magnetic marker 10) positioned closest to the vehicle position estimated by inertial navigation on the map data read out from map database 48. Note that the process of identifying the nearest N-pole magnetic marker 10 so far does not vary depending on whether the magnetic marker is magnetic marker 10 in special area 10A or magnetic marker 10 in a non-special area.
On the other hand, the process after the nearest magnetic marker 10 (N-pole) is identified varies between a case in which that magnetic marker 10 is magnetic marker 10 on the downstream side of special area 10A or N-pole magnetic marker 10 in the non-special area. In the case of magnetic marker 10 in special area 10A, the two-dimensional position (absolute position) of control point CT is identified with high accuracy by using the absolute azimuth (vehicle azimuth) of vehicle 2 identified by the above-described azimuth identifying process, and deviation (lateral deviation) of control point CT in the lateral direction with respect to target path TL is identified. On the other hand, in the case of magnetic marker 10 in the non-special area, the two-dimensional position of control point CT is not identified, and deviation (lateral deviation) of control point CT in the lateral direction is identified by using the vehicle azimuth estimated by IMU 42.
When detected N-pole magnetic marker 10 is of special area 10A, control unit 40 identifies, as in FIG. 18, vehicle position (x1, y1) by using vehicle azimuth Dir1 identified by the above-described azimuth identifying process. Control unit 40 identifies, as vehicle position (x1, y1), the two-dimensional position obtained by shifting, with reference to the position of the nearest magnetic marker 10, by deviation em along direction Dir2 orthogonal to vehicle azimuth Dir1. Note that the newly identified vehicle position serves as the new reference position in inertial navigation when IMU 42 estimates the relative position, and the relative position to be added up by IMU 42 is zero-reset.
Control unit 40 identifies deviation angle $\theta v$ of vehicle azimuth Dir1, identified by the above-described (c) azimuth identifying process, with reference to horizontal direction H defined on the map data. By using this deviation angle $\theta v$, control unit 40 identifies two-dimensional position (x2, y2) of control point CT as the following equations.

[Equation 8]

$$x2 = x1 + Lf \times \cos\theta v$$

$$y2 = y1 + Lf \times \sin\theta v$$

Control unit 40 refers to the map data read out from map database 48 and identifies target path TL corresponding to vehicle position (x1, y1). Then, control unit 40 identifies deviation ey of control point CT (x2, y2) in the lateral direction with respect to target path TL (refer to FIG. 18).

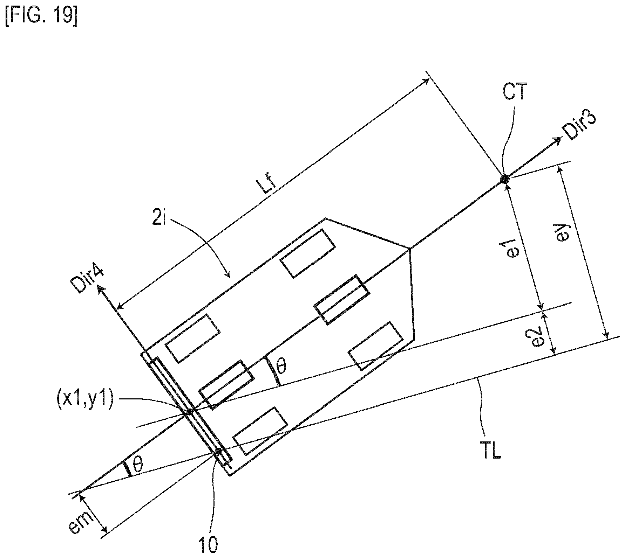

On the other hand, when detected N-pole magnetic marker 10 is of the non-special area, as in FIG. 19, vehicle azimuth Dir3 estimated by IMU 42 is obtained and, vehicle position (x1, y1) is identified by using vehicle azimuth Dir3. Control unit 40 identifies, as the vehicle position, position (x1, y1) obtained by shifting by deviation em along direction Dir4 orthogonal to vehicle azimuth Dir3, with reference to the laying position of the nearest magnetic marker 10. Deviation em is the deviation with respect to the nearest magnetic marker 10 in the lateral direction. Note that newly identified vehicle position (x1, y1) serves as the new reference position in inertial navigation when IMU 42 estimates the relative position, and the relative position to be added up by IMU 42 is zero-reset.

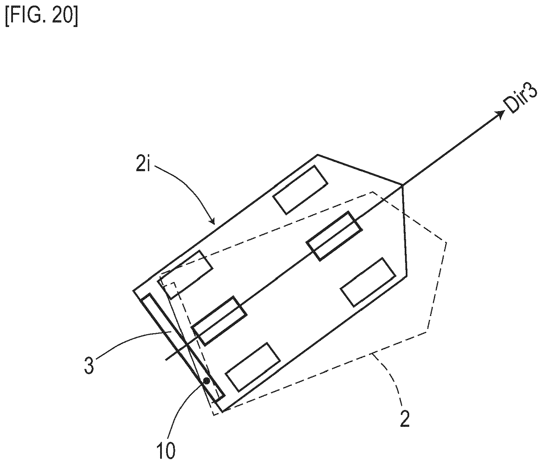

Here, in FIG. 19, the posture of the vehicle based on vehicle azimuth Dir3 estimated by IMU 42 is depicted as vehicle 2i. The posture of vehicle 2i is, as in FIG. 20, different from the true posture of vehicle 2 indicated by a broken line. The posture of vehicle 2 is indefinite in a circumferential direction centering the laying position of detected magnetic marker 10, and an angular error may occur. This angular error is an estimation error of vehicle azimuth Dir3 by IMU 42.

Control unit 40 refers to the map data read out from map database 48 and identifies target path TL corresponding to vehicle position (x1, y1). Control unit 40 identifies deviation angle $\theta$ of vehicle azimuth Dir3 (absolute azimuth) estimated by IMU 42 with reference to the azimuth of target path TL (FIG. 19). By using this deviation angle $\theta$, control unit 40 identifies lateral deviation ey of control point CT, positioned ahead by forward gazing distance Lf from magnetic sensor array 3, with respect to target path TL. Lateral deviation ey of control point CT is a total of e1 and e2 in FIG. 19, and can be calculated by the following equation including deviation angle $\theta$.

$$[\text{Equation 9}]$$

$$ey = e1 + e2$$

$$= Lf \times \sin\theta + em \times \cos\theta$$

(e.2) When Vehicle is Positioned Midway Between Magnetic Markers (N Pole) Adjacent to Each Other

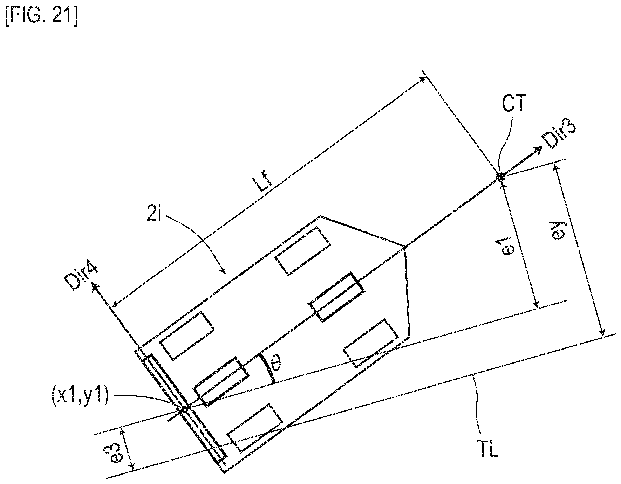

When vehicle 2 is positioned midway between magnetic markers 10 adjacent to each other (FIG. 21), control unit 40 identifies (estimates), as the vehicle position, position (x1, y1) obtained by shifting from the reference position by the relative position estimated by IMU 42. Note that this vehicle position (x1, y1) is the position of the center of magnetic sensor array 3. The reference position is the vehicle position identified at the time of detection of immediately-preceding N-pole magnetic marker 10. Control unit 40 refers to the map data read out from map database 48, and identifies target path TL corresponding to identified vehicle position (x1, y1).

As in FIG. 21, control unit 40 identifies lateral deviation e3 of vehicle position (x1, y1) identified (estimated) as described above, with respect to target path TL. Also, control unit 40 identifies deviation angle $\theta$ of vehicle azimuth Dir3 estimated by IMU 42 with reference to the azimuth (absolute azimuth) of target path TL. Deviation (lateral deviation) ey of control point CT in the lateral direction with respect to target path TL is a total of e1 and e3 in FIG. 21. Control point CT is positioned ahead by forward gazing distance Lf with respect to magnetic sensor array 3. Lateral deviation ey at control point CT can be calculated by the following equation including deviation angle $\theta$.

$$[\text{Equation 10}]$$

$$ey = e1 + e3$$

$$= Lf \times \sin\theta + e3$$

(h) Control Result

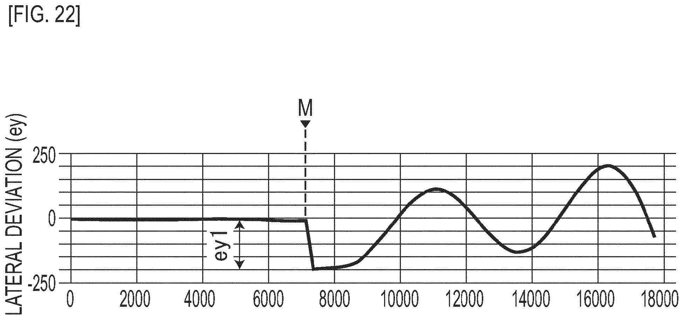

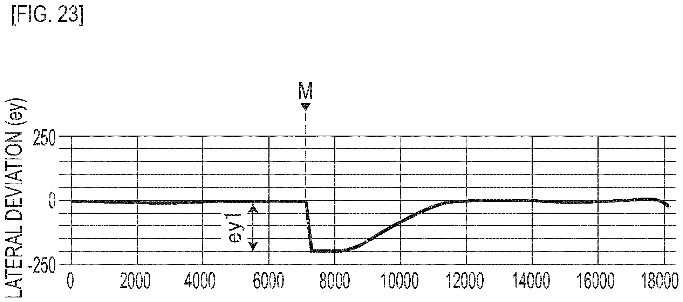

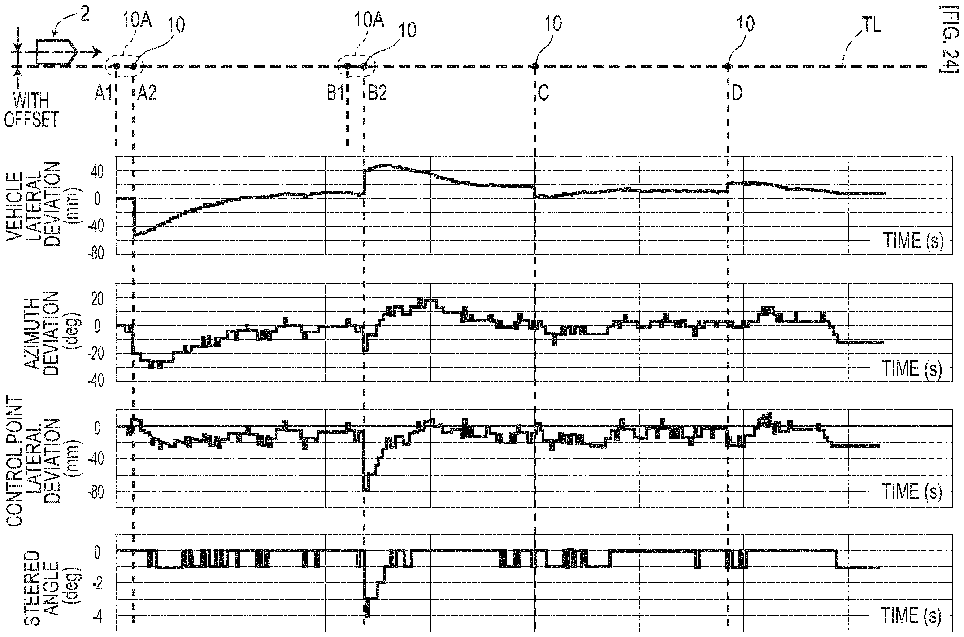

The control result of vehicle 2 by control system 1 of the present embodiment configured as described above is described with reference to FIG. 22 to FIG. 24. FIG. 22 and FIG. 23 depict the results of demonstration experiments in which an influence exerted by forward gazing distance Lf, which is a distance from magnetic sensor array 3 to control point CT, on rectilinear stability of vehicle 2 was investigated. These demonstration experiments are experiments for verifying control when magnetic marker 10 in the non-special area is detected. FIG. 24 depicts the results of control when vehicle 2 passes over special area 10A. Note that to check a difference in control between special area 10A and the non-special area, the drawing includes the results of control of the non-special area. In the following, the results of the demonstration experiments of FIG. 22 and FIG. 23 and the results of control of FIG. 24 are sequentially described.

FIG. 22 depicts the results when offset distance Lo is set at zero in the equation for calculating forward gazing distance Lf by the above-described Equation 2. FIG. 23 depicts the results when offset distance Lo is set as described in the above-described item (f) Control Point Setting. The coordinate axes in these drawings are common. The horizontal axis represents time or distance, and the vertical axis represents lateral deviation ey of vehicle 2. Lateral deviation ey of vehicle 2 is deviation in the lateral direction of the center of magnetic sensor array 3 with respect to target path TL.

The traveling road as a target of the demonstration experiment is straight road 100S (refer to FIG. 1). When vehicle 2 passes over magnetic marker 10 (magnetic marker 10 in the non-special area) at time point M, based on deviation em (refer to FIG. 19) in the lateral direction with respect to magnetic marker 10 identified by marker detection process, lateral deviation ey of control point CT with respect to target path TL is identified. At time point M, lateral deviation ey of control point CT =ey1 becomes apparent, and control for suppressing lateral deviation ey is started. Note that the speed of vehicle 2 is a constant speed of 7.0 km per hour.

In the case of FIG. 22 where offset distance Lo is zero, the state is a hunting state in which lateral deviation ey of control point CT oscillates. In the case of the drawing, a tendency can be seen in which lateral deviation ey does not converge but oscillates to gradually expand. On the other hand, in the case of FIG. 23 where offset distance Lo is appropriately set, lateral deviation ey of control point CT =ey1 at time point M converges early. In the case of this drawing, after lateral deviation ey1 on a negative side occurs, lateral deviation ey converges into 0 without overshooting to a positive side.

In the case of FIG. 23, offset distance Lo equal to or longer than a distance (Lm+Lw) between front wheel axis 211A and magnetic sensor array 3 is set, and long forward gazing distance Lf from magnetic sensor array 3 to control point CT is set. In the case of FIG. 23, by setting forward gazing distance Lf in this manner, rectilinear stability of vehicle 2 is improved. Thus, setting long forward gazing distance Lf to control point CT is effective for improvement in rectilinear stability in rectilinear movement.

Next, FIG. 24 depicts the results of control when vehicle 2 passes over special area 10A, and graphs of four types indicating situations of control of vehicle 2 are included in the drawing. The uppermost stage in the drawing depicts the arrangement of magnetic markers 10 on the traveling road on which vehicle 2 is controlled. The traveling road, on which vehicle 2 is controlled, is a traveling road where special areas 10A are arranged at two locations as spaced from an upstream side corresponding to a left side in the drawing and, subsequently, two magnetic markers 10 in the non-special area are arranged as spaced. Note that each special area 10A is an area in which S-pole magnetic marker 10 on the upstream side and N-pole magnetic marker 10 on the downstream side are arranged with the 0.5 m pitch. In this special area 10A, the absolute azimuth of the line segment connecting two magnetic markers 10 is known. On vehicle 2 side, it is possible to identify the vehicle azimuth by using the azimuth of this line segment and identify the two-dimensional position of vehicle 2 with high accuracy by using this vehicle azimuth.

Note that in the following description, description is made by taking a time point of passing over magnetic marker 10 on the upstream side of special area 10A at a first location from the upstream side as A1, a time point of passing over magnetic marker 10 on the downstream side thereof as A2, a time point of passing over magnetic marker 10 on the upstream side of special area 10A at a second location as B1, a time point of passing over magnetic marker 10 on the downstream side thereof as B2, a time point of passing over magnetic marker 10 of the non-special area at a first location from the upstream side as C, and a time point of passing over magnetic marker 10 of the non-special area at a second location as D.

In the control example of FIG. 24, the path passing directly above magnetic marker 10 is set as target path TL and, in the drawing, the target path TL is indicated by a solid line (uppermost stage in the drawing). In this control example, in a state of traveling as being shifted to left with respect to target path TL, vehicle 2 enters special area 10A at the first location.

Each graph of FIG. 24 is a graph indicating changes in control data during traveling control of vehicle 2. The graph at the uppermost stage is a graph indicating changes in deviation of vehicle 2 in the lateral direction with respect to target path TL, that is, deviation (lateral deviation) of magnetic sensor C8 in the lateral direction positioned at the center of magnetic sensor array 3. As described above, lateral deviation in this graph takes a negative value when vehicle 2 is shifted left with respect to target path TL.

The graph at the second stage from above is a graph indicating changes in azimuth deviation (deviation angle), which is deviation of vehicle azimuth with respect to target path TL. In the azimuth deviation in this graph, deviation on a clockwise rotation side with reference to the azimuth of target path TL takes a positive value, an error on a counterclockwise rotation side takes a negative value.

The graph at the third stage from above is a graph indicating changes in deviation (lateral deviation) of the control point in the lateral direction with respect to target path TL. As with the graph at the first stage, the sign of lateral deviation in the graph takes a negative value when the control point is positioned on a left side of target path TL with reference to the azimuth of target path TL and takes a positive value when the control point is positioned on a right side of target path TL.

The graph on the lowermost stage is a graph indicating changes in the designated steered angle as a control target for the steered angle of front wheels 211 during traveling of vehicle 2. The designated steered angle in the graph takes a positive value for right steering and a negative value for left steering.

FIG. 24 depicts that when vehicle 2 passes over special area 10A, position correction of the vehicle position is not performed at time points A1 and B1, which are time points of passing over magnetic marker 10 on the upstream side, and therefore a large change does not occur in lateral deviation of the vehicle position and lateral deviation of the control point. In addition, no angle correction of the vehicle azimuth is performed at time point A1 and time point B1, and therefore a large change does not occur in azimuth deviation, either. At time points A1 and B1 of passing over magnetic marker 10 on the upstream side of special area 10A, the designated steered angle as the control target for front wheels 211 is maintained as it is. In the configuration of the present embodiment, by keeping the forwarding direction of vehicle 2 constant in a period from time points A1 and B1 to time point A2 or B2, accuracy in identifying the vehicle azimuth in special area 10A is enhanced.

Then, position correction of the vehicle position is performed at time points A2 and B2, which are time points of passing over magnetic marker 10 on the downstream side of special area 10A. With this, a large change occurs in lateral deviation of the vehicle position and lateral deviation of the control point. Furthermore, at time points A2 and B2, angle correction of the vehicle azimuth is performed, and a large change occurs also in azimuth deviation. Thus, a large change occurs in the designated steered angle as the control target of front wheels 211 at time point B2 of passing over magnetic marker 10 on the downstream side of special area 10A.

On the other hand, at time points C and D, which are time points of passing over magnetic marker 10 in the non-special area, while position correction regarding the vehicle position is performed, angle correction of vehicle azimuth is not performed. Thus, at time points C and D, the change in the designated steered angle, that is, the degree of control, is suppressed more than that at time point B2.

As described above, in the control method and control system 1 of the present embodiment, the control point is set at the position ahead of magnetic sensor array 3 for detecting magnetic marker 10, and vehicle 2 is controlled to suppress lateral deviation of the control point with respect to the target path. According to this control, it is possible to improve rectilinear stability on the straight road without impairing followability on the curved road.

In the configuration of the present embodiment, not deviation in the lateral direction measured by magnetic sensor array 3 but lateral deviation at the control point ahead of magnetic sensor array 3 is taken as a control object. In this manner, by taking lateral deviation at the control point ahead of magnetic sensor array 3 as the control object, it is possible to compensate for a response delay (control delay) of vehicle 2. In particular, in the present embodiment, by setting forward gazing distance Lf, which is a distance between magnetic sensor array 3 and the control point, traveling stability on the straight road and followability on the curved road are both achieved on a high order.

Forward gazing distance Lf is a distance obtained by, as in the above-mentioned Equation 2, adding the distance proportional to the vehicle speed and offset distance Lo, which is a constant, together. In the present embodiment, setting of the offset distance is switched between the straight road and the curved road. On the straight road, the offset distance equal to or longer than the distance (Lm+Lw) between front wheel axis 211A and magnetic sensor array 3 is set. On the other hand, on the curved road, offset distance Lo is set, which is twice as long as the distance between rear wheel axis 212A and magnetic sensor array 3 or longer and equal to or shorter than the offset distance on the straight road.

Also in the present embodiment, by setting special area 10A where the vehicle azimuth can be identified by using magnetic marker 10, angle correction during traveling is enabled. In this special area 10A, two magnetic markers 10 are disposed with a 0.5 m pitch. At the time point of passing over magnetic marker 10 on the upstream side, the designated steered angle is maintained as it is. With this, the vehicle azimuth during passage over special area 10A can be brought closer to constant, allowing the vehicle azimuth to be identified by using lateral deviation with respect to two magnetic markers 10. By performing angle correction of vehicle azimuth, it is possible to significantly improve control accuracy, compared with the case in which vehicle 2 is controlled only with the vehicle azimuth estimated by IMU 42.

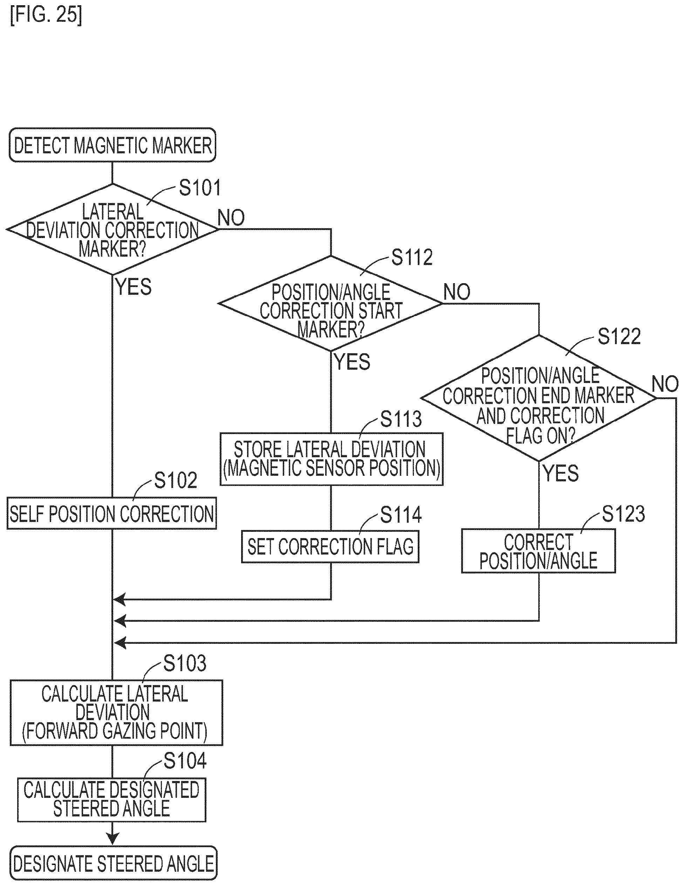

In the present embodiment, as described above with reference to the flow diagram of FIG. 9, during a period in which the correction flag is ON, calculation of the lateral deviation of the control point, which is the forward gazing point, and the designated steered angle is not performed, and the designated steered angle immediately before detection of S-pole magnetic marker 10 is maintained as it is (S114 in the drawings→designate steered angle). In place of this configuration, as in FIG. 25, also during the period in which the correction flag is ON, that is, after magnetic marker 10 (S pole) on the upstream side of special area 10A is detected and until detection of magnetic marker 10 (N pole) on the downstream side, lateral deviation of the control point, which is the forward gazing point, may be calculated (S103), and the designated steered angle in accordance with that lateral deviation may be calculated (S104). In this case, followability to the target path during passage over special area 10A (during the period in which the correction flag is ON) can be improved. Note that the lateral deviation at step S103 described above is calculated based on the vehicle azimuth and the vehicle position estimated by inertial navigation.

Note that the present embodiment is an example in which magnetic markers 10 laminated on the floor surface of traveling road 100 are used for traveling control of vehicle 2 in place of a magnetic tape. The magnetic tape, which is often used in a factory, facility, or the like, requires artisanal techniques for laying. In particular, it is particularly difficult to lay the magnetic tape along a curved line, and lamination without wrinkles is difficult. On the other hand, piece-like magnetic markers are easy to address the curved line. In particular, for vehicle 2 of the present embodiment with a large inner wheel difference, the realities are that it is difficult to define the laying position of the magnetic tape on the curved traveling path and trial and error have been required, such as repeated re-lamination. Magnetic markers 10 are easy to re-laminate and can easily address a change in the shape of the traveling road and so forth.

In the foregoing, while specific examples of the present invention are described in detail as in the embodiments, these specific examples merely disclose examples of technology included in the scope of the claims. Needless to say, the scope of the claims should not be restrictively construed based on the configuration, numerical values, and so forth of the specific examples. The scope of the claims includes techniques acquired by variously modifying, changing, or combining as appropriate the above-described specific examples by using known techniques, knowledge of a person skilled in the art, and so forth.

REFERENCE SIGNS LIST

| | |
|---|---|
| 1 | control system |
| 10 | magnetic marker (mark) |
| 10A | special area |
| 100 | traveling road |
| 100S | straight road |
| 100C | curved road |
| 2 | vehicle |
| 21 | lead vehicle |
| 211 | front wheel (steered wheel) |
| 211A | front wheel axis |
| 212 | rear wheel |
| 212A | rear wheel axis |
| 22 | carriage |
| 3 | magnetic sensor array (magnetic unit, device) |
| 40 | control unit (circuit) |
| 42 | IMU |
| 44 | motor unit |
| 46 | steering unit |
| 48 | map database |
| Cn | magnetic sensor |
| CT | control point |
| TL | target path |

Claims

1. A control method for causing a vehicle to travel along a target path, the vehicle including a magnetic unit that measures a deviation in a lateral direction with respect to a magnetic marker disposed on a traveling road, a circuit that obtains a vehicle azimuth, which is an orientation of the vehicle in a longitudinal direction, and a circuit that controls a steered angle of a steered wheel of the vehicle so that a deviation of a control point in the lateral direction with respect to the target path is brought closer to zero,
the control method comprising:

a process of measuring the deviation in the lateral direction with respect to the magnetic marker;
a process of obtaining the vehicle azimuth;
a process of calculating, for the control point set at a position different from a position of the magnetic unit in the longitudinal direction of the vehicle, the deviation of the control point in the lateral direction with respect to the target path, based on the deviation in the lateral direction with respect to the magnetic marker and the vehicle azimuth;
a process of calculating a designated steered angle as a control target of the steered angle for bringing the deviation of the control point in the lateral direction closer to zero; and
a process of controlling the steered angle of the steered wheel by taking the designated steered angle as the control target.

2. The control method in claim 1, wherein, in the process of calculating the deviation of the control point in the lateral direction, a vehicle position is identified based on the deviation in the lateral direction with respect to the magnetic marker, a position of the magnetic marker, and the vehicle azimuth, and the deviation of the control point in the lateral direction is calculated based on the vehicle position and the vehicle azimuth.

3. The control method in claim 1, wherein, on the traveling road, two magnetic markers positioned as adjacent to each other along a known direction with a known pitch are arranged, with a position of a second magnetic marker of the two magnetic markers positioned on a downstream side in a forwarding direction of the traveling road being known,

the designated steered angle is maintained after a first magnetic marker of the two magnetic markers is detected and until the second magnetic marker is detected,
when the second magnetic marker of the two magnetic markers is detected, by identifying a deviation of the vehicle azimuth with respect to the known direction, the vehicle azimuth is identified based on the known direction, and
a vehicle position is identified based on the deviation in the lateral direction with respect to the second magnetic marker, the position of the second magnetic marker, and the vehicle azimuth, and the deviation of the control point in the lateral direction is calculated based on the vehicle position and the vehicle azimuth.

4. The control method in claim 1, wherein, on the traveling road, two magnetic markers positioned as adjacent to each other along a known direction with a known pitch are arranged, with a position of a second magnetic marker of the two magnetic markers positioned on a downstream side in a forwarding direction of the traveling road being known,

after a first magnetic marker of the two magnetic markers is detected and until the second magnetic marker is detected, a vehicle position and the vehicle azimuth are estimated by inertial navigation, and the deviation of the control point in the lateral direction is calculated based on the vehicle position and the vehicle azimuth,
when the second magnetic marker of the two magnetic markers is detected, by identifying a deviation of the vehicle azimuth with respect to the known direction, the vehicle azimuth is identified based on the known direction, and
the vehicle position is identified based on the deviation in the lateral direction with respect to the second magnetic marker, the position of the second magnetic marker, and the vehicle azimuth, and the deviation of the control point in the lateral direction is calculated based on the vehicle position and the vehicle azimuth.

5. The control method in any one of claims 1 to 4, wherein the control point is positioned ahead of the magnetic unit in the longitudinal direction of the vehicle by a distance obtained by adding an offset distance to a distance obtained by multiplying a speed of the vehicle by a predetermined time.

6. The control method in claim 5, wherein the vehicle is a vehicle that has a front wheel as the steered wheel and a rear wheel as a fixed wheel, and the magnetic unit is arranged behind the rear wheel, and

while the offset distance at linear traveling when the target path is a straight line is a distance equal to or longer than a distance between the magnetic unit and the front wheel in the longitudinal direction,
the offset distance at curved traveling when the target path is a curved line is a distance twice as long as a distance between the magnetic unit and the rear wheel in the longitudinal direction or longer.

7. The control method in claim 6, wherein an upper limit of the offset distance at the curved traveling is the offset distance at the linear traveling.

8. The control method in any one of claims 1 to 7, wherein the designated steered angle, which is the control target of the steered angle, is calculated by a control equation including a feedforward term that reflects a curvature of the target path and a feedback term that reflects the deviation of the control point in the lateral direction.

9. A control system for causing a vehicle to travel along a target path, the control system comprising:

a magnetic unit that measures a deviation in a lateral direction with respect to a magnetic marker disposed on a traveling road;
a circuit that obtains a vehicle azimuth, which is an orientation of the vehicle in a longitudinal direction; and

a circuit that calculates, for a control point set at a position different from a position of the magnetic unit in the longitudinal direction of the vehicle, the deviation of the control point in the lateral direction with respect to the target path, based on the deviation in the lateral direction with respect to the magnetic marker and the vehicle azimuth; and

a circuit that calculates a designated steered angle as a control target of a steered angle of a steered wheel of the vehicle so that the deviation of the control point in the lateral direction is brought closer to zero and controls the steered angle of the steered wheel by taking the designated steered angle as the control target.

10. The control system in claim 9, wherein the circuit that calculates the deviation of the control point in the lateral direction is configured to identify a vehicle position based on the deviation in the lateral direction with respect to the magnetic marker, a position of the magnetic marker, and the vehicle azimuth, and calculate the deviation of the control point in the lateral direction based on the vehicle position and the vehicle azimuth.

11. The control system in claim 9, wherein, on the traveling road, two magnetic markers positioned as adjacent to each other along a known direction with a known pitch are arranged, with a position of a second magnetic marker of the two magnetic markers positioned on a downstream side in a forwarding direction of the traveling road being known,

the designated steered angle is maintained by the circuit that controls the steered angle after a first magnetic marker of the two magnetic markers is detected and until the second magnetic marker is detected,

when the second magnetic marker of the two magnetic markers is detected, the circuit that obtains the vehicle azimuth identifies a deviation of the vehicle azimuth with respect to the known direction, thereby identifying the vehicle azimuth based on the known direction, and

the circuit that calculates the deviation of the control point in the lateral direction identifies a vehicle position based on the deviation in the lateral direction with respect to the second magnetic marker, the position of the second magnetic marker, and the vehicle azimuth, and calculates the deviation of the control point in the lateral direction based on the vehicle position and the vehicle azimuth.

12. The control system in claim 9, wherein, on the traveling road, two magnetic markers positioned as adjacent to each other along a known direction with a known pitch are arranged, with a position of a second magnetic marker of the two magnetic markers positioned on a downstream side in a forwarding direction of the traveling road being known,

after a first magnetic marker of the two magnetic markers is detected and until the second magnetic marker is detected, the circuit that obtains the vehicle azimuth estimates the vehicle azimuth by inertial navigation, and the circuit that calculates the deviation of the control point in the lateral direction calculates the deviation of the control point in the lateral direction based on a vehicle position and the vehicle azimuth estimated by the inertial navigation,

when the second magnetic marker of the two magnetic markers is detected, the circuit that obtains the vehicle azimuth identifies a deviation of the vehicle azimuth with respect to the known direction, thereby identifying the vehicle azimuth based on the known direction, and

the circuit that calculates the deviation of the control point in the lateral direction identifies the vehicle position based on the deviation in the lateral direction with respect to the second magnetic marker, the position of the second magnetic marker, and the vehicle azimuth, and calculates the deviation of the control point in the lateral direction based on the vehicle position and the vehicle azimuth.

13. The control system in any one of claims 9 to 12, wherein the circuit that controls the steered angle is configured to calculate the designated steered angle, which is the control target of the steered angle, by a control equation including a feedforward term that reflects a curvature of the target path and a feedback term that reflects the deviation of the control point in the lateral direction.

[FIG. 1]

FORWARDING DIRECTION

[FIG. 2]

10

[FIG. 3]

[FIG. 4]

[FIG. 5]

21

40

CONTROL UNIT

| CPU |

| ROM |

| RAM |

| I/O |

MAGNETIC SENSOR ARRAY — 3

IMU — 42

MOTOR UNIT — 44

WHEEL SPEED UNIT — 442

STERRING UNIT — 46

MAP DATABASE — 48

[FIG. 6]

[FIG. 7]

[FIG. 8]

[FIG. 9]

```
                ┌─────────────────────────┐
                │ DETECT MAGNETIC MARKER  │
                └─────────────────────────┘
                            │
                            │      S101
                         ╱──┴──╲
                   ╱─────────────────╲
                  │    LATERAL        │      NO
                  │ DEVIATION CORRECTION ├──────────┐
                  │    MARKER?        │             │
                   ╲─────────────────╱              │
                         ╲──┬──╱                    │
                           YES                      │      S112
                            │                    ╱──┴──╲
                            │              ╱─────────────────╲
                            │             │  POSITION/ANGLE   │   NO
                            │             │ CORRECTION START  ├──────────┐
                            │             │    MARKER?        │          │
                            │              ╲─────────────────╱           │
                            │                    ╲──┬──╱                  │
                            │                      YES                    │   S122
                            │                       │                  ╱──┴──╲
                            │                       │            ╱──────────────────╲
                            │                       │           │   POSITION/ANGLE    │  NO
                            │                       │           │ CORRECTION END MARKER├────┐
                            │                       │           │  AND CORRECTION      │    │
                            │                       │           │    FLAG ON?          │    │
                            │                       │            ╲──────────────────╱      │
                            │                       │                  ╲──┬──╱              │
                            │                       │            S113    YES       S123     │
                            │            ┌──────────┴──────────┐      ┌──────┴──────┐       │
                            │            │ STORE LATERAL DEVIATION│    │   CORRECT   │       │
                            │            │(MAGNETIC SENSOR POSITION)│  │POSITION/ANGLE│      │
                            │            └──────────┬──────────┘      └──────┬──────┘       │
                   S102     │               S114    │                        │              │
            ┌───────────────┴──┐    ┌───────────────┴────┐                   │              │
            │ SELF POSITION    │    │ SET CORRECTION FLAG│                    │              │
            │   CORRECTION     │    └───────────────┬────┘                    │              │
            └───────────────┬──┘                    │                        │              │
                            │◄──────────────────────┘                        │              │
                            │◄────────────────────────────────────────────────              │
                            │                                                                │
                   S103     │                                                                │
            ┌───────────────┴──────┐                                                         │
            │ CALCULATE LATERAL    │                                                         │
            │   DEVIATION          │                                                         │
            │(FORWARD GAZING POINT)│                                                         │
            └───────────────┬──────┘                                                         │
                   S104     │                                                                │
            ┌───────────────┴──────┐                                                         │
            │ CALCULATE DESIGNATED │                                                         │
            │    STEERED ANGLE     │                                                         │
            └───────────────┬──────┘                                                         │
                            │◄───────────────────────────────────────────────────────────────
                            ▼
                ┌─────────────────────────┐
                │ DESIGNATE STEERED ANGLE │
                └─────────────────────────┘
```

[FIG. 10]

[FIG. 11]

[FIG. 12]

[FIG. 13]

[FIG. 14]

[FIG. 15]

[FIG. 16]

$$\delta = Ky \cdot ey$$

[FIG. 17]

[FIG. 18]

[FIG. 19]

[FIG. 20]

[FIG. 21]

[FIG. 22]

[FIG. 23]

[FIG. 24]

[FIG. 25]

## INTERNATIONAL SEARCH REPORT

| International application No. |
|---|
| **PCT/JP2022/035549** |

| A. | CLASSIFICATION OF SUBJECT MATTER |
|---|---|

*G05D 1/02*(2020.01)i
FI:  G05D1/02 A

According to International Patent Classification (IPC) or to both national classification and IPC

| B. | FIELDS SEARCHED |
|---|---|

Minimum documentation searched (classification system followed by classification symbols)

G05D1/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2001-273033 A (TOYOTA MOTOR CORP) 05 October 2001 (2001-10-05) in particular, paragraphs [0020], [0024], [0025], fig. 5 | 1-6, 8-13 |
| A | | 7 |
| Y | JP 2012-210917 A (TOYOTA MOTOR CORP) 01 November 2012 (2012-11-01) in particular, paragraphs [0078]-[0083], [0117], [0128], fig. 2, 3, 4, 7 | 1-6, 8-13 |
| Y | JP 2019-168939 A (YANMAR CO LTD) 03 October 2019 (2019-10-03) in particular, paragraphs [0024], [0026], [0043]-[0047], [0049], [0055], fig. 6, 9 | 1-6, 8-13 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/035549**

| Patent document cited in search report | | | Publication date (day/month/year) | Patent family member(s) | Publication date (day/month/year) |
|---|---|---|---|---|---|
| JP | 2001-273033 | A | 05 October 2001 | (Family: none) | |
| JP | 2012-210917 | A | 01 November 2012 | US 2014/0012469 A1 in particular, paragraphs [0124]-[0130], [0167], [0178], fig. 2, 3, 4, 7 WO 2012/128232 A1 CN 103442970 A | |
| JP | 2019-168939 | A | 03 October 2019 | (Family: none) | |

Form PCT/ISA/210 (patent family annex) (January 2015)

**EP 4 411 503 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011008598 A